# EUROPEAN PATENT SPECIFICATION

(11) **EP 3 556 251 B1**
(45) Date of publication and mention of the grant of the patent: **09.09.2020**
(21) Application number: 19168630.2
(22) Date of filing: 11.04.2019
(51) Int. Cl.: A47C 1/024, A47C 7/50, B60N 2/06

(54) **INTERACTIVE SEAT**
INTERAKTIVER SITZ
SIÈGE INTERACTIF

(30) Priority: 16.04.2018 ES 201830536 U
(43) Date of publication of application: 23.10.2019
(73) Proprietor: Fama Sofas, S.L.U., 30510 Yecla (Murcia) (ES)
(72) Inventor: LÓPEZ GIL, Félix, 30510 Yecla (Murcia) (ES)
(74) Representative: Ungria López, Javier

(56) References cited:
- EP-A2- 3 348 173
- WO-A1-2015/148774
- DE-A1-102015 222 715

## Description

### OBJECT OF THE INVENTION

The present invention relates to a novel interactive seat comprising movable parts, which are actuated by means of electric actuator devices, in order to position said movable parts according to the resting preferences of the user.

Specifically, the mentioned movable parts can be, among others, the back, the footrest, the armrest, etc.

The main object of the invention consists of equipping this type of seat (recliner, lounge chair, etc.), with means for the interactive control thereof, starting from the very user performing pressure actions on specific points of the upholstered surface, such that the user chooses the movements of the movable parts without needing to actuate remotes or visible buttons.

A second objective of the invention is to combine different pressure actions or modes, so that the seat is able to perform adjustments that are complex or electronically programmed.

### BACKGROUND OF THE INVENTION

In the current state of the art, recliners or seats in general and of any kind, normally upholstered, are known and are equipped with movable parts, which enable both the size, tilting or ergonomics of said movable parts to be modified, normally by actuating remotes or electronic panels equipped with buttons or touch screens, integrated in the seat itself or linked to it by means of cables. Said buttons and touch screens enable the user to electrically actuate motors or linear actuators, which assist in adjusting the relative positions of the mentioned movable parts, until the suitable or desired position is reached.

All these seats must be managed starting from the user interacting with the seat by means of pushing the corresponding buttons or sensors with their hand, which without a doubt on occasion involves reducing the degree of comfort.

If, furthermore, the person using the seat has some sort of motor or sensory disability, this involves even more difficulty when accessing the correct positioning of the movable parts of the seat. Gesture controlled vehicle seats are known from WO2015/148774 A1 and DE102015222715 A1.

### DESCRIPTION OF THE INVENTION

With the aim of reaching the aforementioned objectives and preventing the drawbacks mentioned in the previous sections, the invention proposes an interactive seat as claimed in claim 1.

In one embodiment, the sensor has a laminar structure.

In another embodiment, the sensor preferably has a longitudinal dimension between 2 and 80 cm, and more preferably between 5 and 60 cm.

In another embodiment, the electronic module manages the signals sent by the three sensors, distinguishing and interpreting the simple signals emitted by one or several sensors in an individual manner, and the composite signals made up of several pulsations combined from at least two sensors, further enabling the different durations in time of the pressure action exerted by the user on the corresponding sensor to be additionally interpreted, interpreting them as different orders, such that a pulsation with a short duration can be used to actuate a movable part and a more prolonged one for performing an action different from the first one.

In another embodiment, the sensors coincide in location with a pattern of the decoration of the interactive seat.

In another embodiment, the sensors are located underneath printed marks, in the very upholstery of the interactive seat.

In another embodiment, the sensors are situated inserted between a decorative upholstery and a padded body of the interactive seat.

All the embodiments indicated previously can be combined.

For the purpose of helping to make this specification more readily understandable, a series of figures constituting an integral part of the same has been included below, wherein by way of illustration and nor limitation the object of the invention has been represented.

### BRIEF DESCRIPTION OF THE DRAWINGS

**Figure 1****.-** Shows a perspective view of a recliner with the control system object of the invention.
**Figure 2****.-** Shows a detail view of the placement of a pressure sensor in an armrest of the recliner.
**Figure 3****.-** Shows a detail view of the location of a pressure sensor in the area of the seat.
**Figure 4****.-** Shows a detail of an example of an electronic block diagram for the
   actuation of the adjustment system object of the invention.
**Figure 5****.-** Shows a cross section of the location of an actuation sensor.

### DESCRIPTION OF AN EXEMPLARY EMBODIMENT OF THE INVENTION

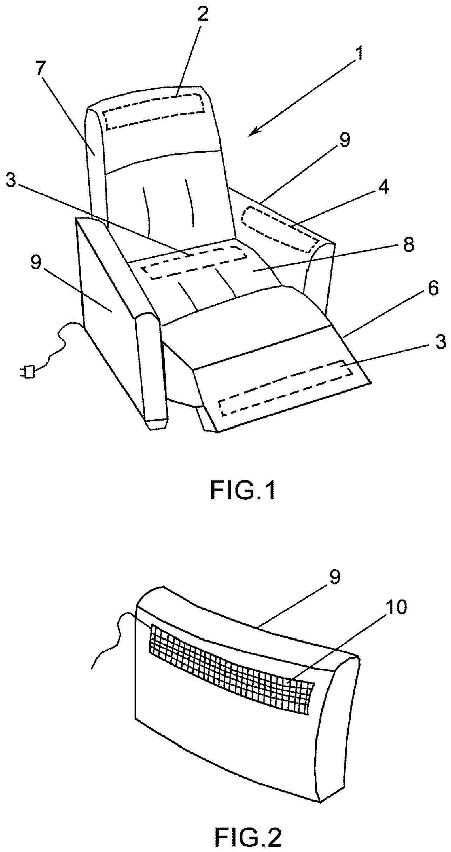

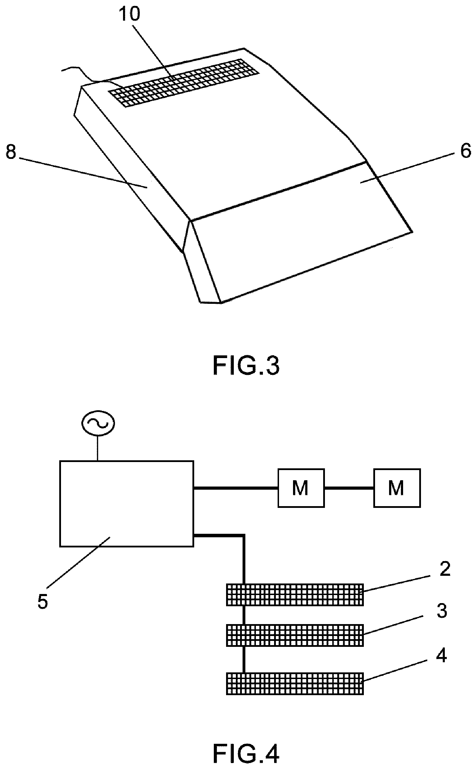

Considering the numbering adopted in the figures, FIG. 1 shows an interactive seat object of the invention, which in the particular case of FIG. 1, is a recliner 1. The recliner 1 comprises three pressure sensors 2,3,4 electrically connected to the corresponding electronic module 5 (FIG. 4) which receives the electrical signal emitted by three pressure sensors 2,3,4. The electronic module 5 interprets, depending on programmable parameters and on the signals received from the three pressure sensors 2,3,4, the action to be performed, such as for example, collapsing the footrest 6, tilting the back 7, or raising the seat surface 8.

In a preferred embodiment of the recliner, the three sensors are respectively located in the back 7 at the height of the head of the user, another in the seat surface 8 and a third one in the side of one of the armrests 9. These sensors have a structure using textile bands 10 or strips, which cover a wide surface of the area wherein they are located.

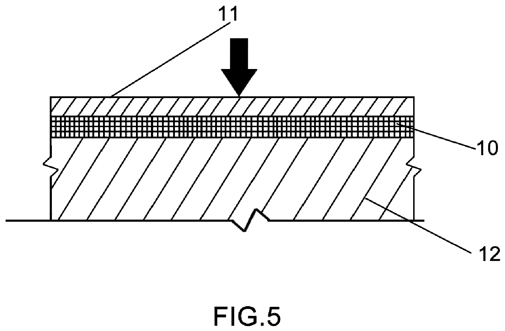

As seen in FIG. 5, the assembly of the three pressure sensors 2,3,4 is preferably performed between the decorative upholstery 11 and the padded body 12 of the recliner 1.

The flexibility of said decorative upholstery 11 makes it possible to correctly transmit the activation force of any of the three pressure sensors 2,3,4.

When the user wants to modify the relative position of one of the movable parts of the recliner 1, they only have to exert a slight pressure on at least one of the pressure sensors 2,3,4 or, in other words, on the upholstered area wherein said sensors are located, so that the corresponding actuator device M is actuated.

In order to improve the experience and possibilities for adjusting the recliner 1, it is foreseen that the electronic module 5, which is responsible for managing the signals sent by said sensors 2,3,4, distinguishes and interprets not only the simple signals emitted by them in an individual manner, but also the composite ones made of several combined pulsations. Also the different durations in time of the pressure action, for example on the sensor corresponding to the back, is interpreted by the electronic module 5 as a different order, such that a pulsation with a short duration, between 1 and 2 seconds, is used, for example, to actuate the raising of the footrest 6 and a more prolonged pulsation is used to lower it.

## Claims

1. **AN INTERACTIVE SEAT** comprising movable parts (6,7,8) which are actuated by means of at least one electric actuator device (M), according to the resting preferences of a user, wherein the interactive seat comprises:
• at least one pressure sensor (2,3,4) hidden underneath a layer of outer upholstery for decoration or contact (11) distributed along the surface in contact with the body of the user;
• an electronic module (5) connected to the electric actuator device (M) and to the pressure sensor (2,3,4);
wherein the electronic module (5) actuates the movable parts (6,7,8) by means of the electric actuator device (M) based on a voluntary pressure exerted by the user with any part of their body on said pressure sensor (2,3,4), and additionally based on the duration time of said voluntary pressure; **characterised in that** the movable parts are a footrest (6), a back (7) and a seat (8), wherein the interactive seat (1) additionally comprises respective sensors (2,3,4) connected to the electronic module (5), which receives the electrical signals emitted by the three sensors (2,3,4), such that the electronic module (5) interprets said electrical signals and, depending on programmable parameters, executes the action to be performed selected from moving the footrest (6), modifying the tilting of the back (7) and raising/lowering the surface of the seat (8).

2. **THE INTERACTIVE SEAT** according to claim 1, wherein at least one sensor (2,3,4) has a laminar structure.

3. **THE INTERACTIVE SEAT** according to claim 1 or 2, wherein at least one sensor (2,3,4) has a longitudinal dimension between 2 and 80 cm, preferably between 5 and 60 cm.

4. **THE INTERACTIVE SEAT,** according to claim 1, wherein the electronic module (5) manages the signals sent by the three sensors (2,3,4), distinguishing and interpreting the simple signals emitted by one or several sensors (2,3,4) in an individual manner, and the composite signals made up of several pulsations combined from at least two sensors (2,3,4), further enabling the different durations in time of the pressure action exerted by the user on the corresponding sensor to be additionally interpreted, interpreting them as different orders, such that a pulsation with a short duration can be used to actuate a movable part and a more prolonged pulsation for performing an action different from the first one.

5. **THE INTERACTIVE SEAT** according to any one of the preceding claims, wherein the sensors (2,3,4) coincide in location with a pattern of the very decoration of the interactive seat (1).

6. **THE INTERACTIVE SEAT** according to any one of the preceding claims, wherein the sensors (2,3,4) are located under printed marks, in the very upholstery of the interactive seat (1).

7. **THE INTERACTIVE SEAT** according to any one of the preceding claims, wherein the sensors (2,3,4) are situated inserted between a decorative upholstery (11) and a padded body (12) of the interactive seat (1).

## Patentansprüche

1. Interaktiver Sitz, umfassend bewegliche Teile (6, 7, 8), die durch wenigstens eine elektrische Betätigungsvorrichtung (M) gemäß den Ruhepräferenzen eines Benutzers betätigt werden, wobei der interaktive Sitz umfasst:
wenigstens einen unter einer Schicht aus Außenpolsterung zur Dekoration oder zum Kontakt (11) entlang der Oberfläche in Kontakt mit dem Körper des Benutzers verteilten verborgenen Drucksensor (2, 3, 4);
ein mit der elektrischen Betätigungsvorrichtung (MM) und dem Drucksensor (2, 3, 4) verbundenes elektronisches Modul (5);
wobei das elektronische Modul (5) die beweglichen Teile (6, 7, 8) durch die elektrische Betätigungsvorrichtung (M) auf der Basis einer vom Benutzer mit einem beliebigen Teil seines Körpers auf den Drucksensor (2, 3, 4) ausgeübten absichtlichen Druck und zusätzlich auf der Basis der Zeitdauer des absichtlichen Drucks betätigt;
**dadurch gekennzeichnet, dass** die beweglichen Teile eine Fußlehne (6), eine Rückenlehne (7) und eine Sitzfläche (8) sind, wobei der interaktive Sitz (1) zusätzlich jeweilige Sensoren (2, 3, 4) umfasst, die mit dem elektronischen Modul (5) verbunden ist, das die von den drei Sensoren (2, 3, 4) gesendeten elektrischen Signale empfängt, so dass das elektronische Modul (5) die elektrischen Signale interpretiert und entsprechend programmierbaren Parametern die auszuführende Aktion ausführt, ausgewählt aus dem Bewegen der Fußlehne (6), dem Ändern der Neigung der Rückenlehne (7) und dem Anheben/Absenken der Oberfläche der Sitzfläche (8).

2. Interaktiver Sitz nach Anspruch 1, wobei wenigstens ein Sensor (2, 3, 4) eine laminare Struktur aufweist.

3. Interaktiver Sitz nach Anspruch 1 oder 2, wobei wenigstens ein Sensor (2, 3, 4) ein Längenmaß von 2 bis 80 cm, vorzugsweise von 5 bis 60 cm aufweist.

4. Interaktiver Sitz nach Anspruch 1, wobei das elektronische Modul (5) die von den drei Sensoren (2, 3, 4) gesendeten Signale verwaltet, wobei die von einem oder mehreren Sensoren (2, 3, 4) gesendeten Abtastsignale auf eine einzelne Weise und die zusammengesetzten Signale bestehend aus mehreren Impulsen kombiniert von wenigstens zwei Sensoren (2, 3, 4) unterschieden und interpretiert werden, wobei ferner ein zusätzliches Interpretieren der unterschiedlichen Zeitdauer der vom Benutzer auf den entsprechenden Sensor ausgeübten Druckaktion ermöglicht wird, wobei diese als verschiedene Befehle interpretiert werden, so dass ein Impuls mit einer kurzen Dauer zum Betätigen eines beweglichen Teils und ein längerer Impuls zum Ausführen einer Aktion verschieden von der ersten verwendet werden kann.

5. Interaktiver Sitz nach einem der vorhergehenden Ansprüche, wobei die Sensoren (2, 3, 4) in der Position mit einem Muster der Dekoration des interaktiven Sitzes (1) übereinstimmen.

6. Interaktiver Sitz nach einem der vorhergehenden Ansprüche, wobei die Sensoren (2, 3, 4) unter gedruckten Marken in der Polsterung des interaktiven Sitzes (1) angeordnet sind.

7. Interaktiver Sitz nach einem der vorhergehenden Ansprüche, wobei die Sensoren (2, 3, 4) eingesetzt zwischen einer dekorativen Polsterung (11) und einem gepolsterten Körper (12) des interaktiven Sitzes (1) angeordnet sind.

## Revendications

1. **SIEGE INTERACTIF** comprenant des parties mobiles (6, 7, 8) qui sont actionnées au moyen d'au moins un dispositif actionneur électrique (M), selon les préférences d'assise d'un utilisateur, dans lequel le siège interactif comprend :
• au moins un capteur de pression (2, 3, 4) caché sous une couche de revêtement extérieur de décoration ou de contact (11) réparti le long de la surface en contact avec le corps de l'utilisateur ;
• un module électronique (5) connecté au dispositif actionneur électrique (M) et au capteur de pression (2, 3, 4) ;
dans lequel le module électronique (5) actionne les parties mobiles (6, 7, 8) au moyen du dispositif actionneur électrique (M) sur la base d'une pression volontaire exercée par l'utilisateur avec une partie quelconque de son corps sur ledit capteur de pression (2, 3, 4), et en outre, sur la base de la durée de ladite pression volontaire ;
**caractérisé en ce que** les parties mobiles sont un repose-pieds (6), un dossier (7) et une assise (8), dans lequel le siège interactif (1) comprend de plus des capteurs respectifs (2, 3, 4) connectés au module électronique (5) qui reçoit les signaux électriques émis par les trois capteurs (2, 3, 4), de sorte que le module électronique (5) interprète lesdits signaux électriques et, en fonction de paramètres programmables, exécute l'action à accomplir choisie parmi : déplacer le repose-pieds (6), modifier l'inclinaison du dossier (7) et élever/abaisser la surface d'assise (8).

2. **SIEGE INTERACTIF** selon la revendication 1, dans lequel au moins un capteur (2, 3, 4) possède une structure laminaire.

3. **SIEGE INTERACTIF** selon la revendication 1 ou 2, dans lequel au moins un capteur (2, 3, 4) a une dimension longitudinale comprise entre 2 et 80 cm, de préférence entre 5 et 60 cm.

4. **SIEGE INTERACTIF** selon la revendication 1, dans lequel le module électronique (5) gère les signaux envoyés par les trois capteurs (2, 3, 4), en distinguant et en interprétant les signaux simples émis par un ou plusieurs capteur(s) (2, 3, 4) de manière individuelle, et les signaux composites constitués de plusieurs pulsations combinées en provenance d'au moins deux capteurs (2, 3, 4), en permettant en outre aux différentes durées de l'action de pression exercée par l'utilisateur sur le capteur correspondant d'être également interprétées, en les interprétant comme des ordres différents, de sorte qu'une pulsation de courte durée puisse être utilisée pour actionner une partie mobile et une pulsation plus prolongée pour accomplir une action différente de la première.

5. **SIEGE INTERACTIF** selon l'une quelconque des revendications précédentes, dans lequel les capteurs (2, 3, 4) coïncident par leur emplacement avec un motif de décoration même du siège interactif (1).

6. **SIEGE INTERACTIF** selon l'une quelconque des revendications précédentes, dans lequel les capteurs (2, 3, 4) sont situés sous des marques imprimées, dans le revêtement extérieur même du siège interactif (1).

7. **SIEGE INTERACTIF** selon l'une quelconque des revendications précédentes, dans lequel les capteurs (2, 3, 4) sont situés de manière à être insérés entre un revêtement extérieur décoratif (11) et un corps rembourré (12) du siège interactif (1).
